# EUROPÄISCHE PATENTSCHRIFT

(11) **EP 0 567 072 B1**
(45) Veröffentlichungstag und Bekanntmachung des Hinweises auf die Patenterteilung: **01.07.1998**
(21) Anmeldenummer: 93106387.9
(22) Anmeldetag: 20.04.1993
(51) Int. Cl.: H04N 7/00

(54) **Verfahren und Vorrichtung zur Film-Mode-Detektion**
Film mode detection procedure and device
Procédé et dispositif de détection de mode ciné

(30) Priorität: 24.04.1992 DE 4213551
(43) Veröffentlichungstag der Anmeldung: 27.10.1993
(73) Patentinhaber: DEUTSCHE THOMSON-BRANDT GMBH, 78048 Villingen-Schwenningen (DE)
(72) Erfinder: Correa, Carlos, W-7730 VS-Schwenningen (DE); Schweer, Rainer, W-7732 Niedereschach (DE)

(56) Entgegenhaltungen:
- EP-A- 0 343 728
- EP-A- 0 359 334
- EP-A- 0 419 353

## Beschreibung

Die Erfindung betrifft ein Verfahren zur Film-Mode-Detektion und eine Vorrichtung zur Durchführung des Verfahrens.

### Stand der Technik

Neue Fernsehsysteme, z.B. HDMAC und PALplus, verwenden einen Film-Mode, der im Fall von film-abgetasteten Quellsignalen eine erhöhte vertikale Auflösung ermöglicht. Eine Information darüber, ob ein solches Quellsignal vorliegt, wird zusammen mit dem Fernsehsignal übertragen. Eine Auswertung im Empfänger bedingt aber unter Umständen einen nicht unerheblichen Hardware-Aufwand. Außerdem ist nicht sichergestellt, daß alle Fernsehsender oder alle Programme diese Zusatzinformation korrekt übertragen.

Aus der Europäischen Patentanmeldung EP 0 359 334 A2 ist ein HDTV-Fernsehgerät bekannt, daß eine Decodierschaltung für ein mit dem Fernsehsignal übertragenes Film-Mode-Erkennungssignal aufweist.

### Erfindung

Der Erfindung liegt die Aufgabe zugrunde, ein Verfahren bzw. eine Vorrichtung zur Film-Mode-Detektion mit geringem Hardware-Aufwand und hoher Zuverlässigkeit anzugeben. Diese Aufgabe wird durch das in Anspruch 1 angegebene Verfahren gelöst.

Es wird für jedes vertikal benachbarte (Luminanz-) Bildpunktpaar P2, P3 im Halbbild n geprüft, ob die beiden vertikal dazwischenliegenden Bildpunkte P1,P4 aus den beiden benachbarten Halb bildern n-1 und n+1 in ihrer Amplitude zwischen den Amplituden des Bildpunktpaars P2,P3 aus Halbbild n liegen. Diese Vergleiche werden z.B. zeilenweise für aktive Bildpunkte aktiver Zeilen durchgeführt. Diese Vergleichs-Ergebnisse werden innerhalb jedes Halbbilds kombiniert. Über jeweils eine bestimmte Zahl, z.B. 64, von Halbbildern müssen diese Kombinations-Ergebnisse einem bestimmten Muster entsprechen, damit der Film-Mode erkannt wird.

Es hat sich gezeigt, daß durch unterschiedliche Kriterien ermittelt werden muß, wann der Film-Mode eingeschaltet und wann er ausgeschaltet werden muß. Die Ausschalt-Kriterien sind weniger streng. Innerhalb einer festgelegten Zahl, z.B. 64, von Halbbildern darf eine bestimmte Zahl, z.B. 6, von 'falschen' Kombinations-Ergebnissen auftreten. Erst bei Überschreiten dieser Zahl wird der Film-Mode abgeschaltet. Vorteilhaft wird für die Ermittlung der Film-Mode-Einschaltbedingungen jedes Halbbild in eine festgelegte Anzahl (z.B. vier) von Segmenten eingeteilt, wobei für jedes Segment ein eigenes Kombinations-Ergebnis ermittelt wird. Dadurch wird die Erkennungs-Sicherheit erhöht und es steht nach entsprechend kürzerer Zeit ein Einschalt-Kriterium zur Verfügung.

Im Prinzip besteht das erfindungsgemäße Verfahren in einer Film-Mode-Detektion, bei der jeweils für vertikal benachbarte Bildpunktpaare P2 und P3 in einem Halbbild n verglichen wird, ob die beiden vertikal dazwischenliegenden Bildpunkte P1 bzw. P4 aus den beiden benachbarten Halbbildern n-1 bzw. n+1 in ihrer Amplitude zwischen den Amplituden des Bildpunktpaars P2 und P3 liegen, wobei diese Vergleichs-Ergebnisse innerhalb von Halbbildern kombiniert werden und Film-Mode gesetzt wird, wenn jeweils innerhalb einer festgelegten, ersten Anzahl - insbesondere 64 - von Halbbildern diese Kombinations-Ergebnisse einem festgelegten Muster entsprechen.

Vorteilhaft wird der Film-Mode rückgesetzt, wenn jeweils innerhalb einer festgelegten, zweiten Anzahl - insbesondere 64 - von Halbbildern die Kombinations-Ergebnisse für eine festgelegte, dritte Anzahl - insbesondere 7 - von Halbbildern nicht dem festgelegten Muster entsprechen.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, eine Vorrichtung zur Durchführung für das erfindungsgemäße Verfahren anzugeben. Diese Aufgabe wird durch die in Anspruch 11 angegebene Vorrichtung gelöst.

Im Prinzip werden der erfindungsgemäßen Vorrichtung Bildpunkt-Abtastwerte von Eingangs-Zeilen (IL) zugeführt, die an einen ersten Halbbildspeicher (312H₁), an einen ersten Komparator (COMP1) und an einen dritten Komparator (COMP3) weitergeleitet werden, wobei die Ausgangssignale des ersten Halbbildspeichers dem Eingang eines Zeilenspeichers (1H), dem ersten Komparator (COMP1) und einem zweiten Komparator (COMP2) zugeführt werden und die Ausgangssignale des Zeilenspeichers dem Eingang eines zweiten Halbbildspeichers (312H₂), dem dritten Komparator (COMP3) und einem vierten Komparator (COMP4) zugeführt werden und die Ausgangssignale des zweiten Halbbildspeichers dem zweiten Komparator (COMP2) und dem vierten Komparator (COMP4) zugeführt werden, wobei die Ausgänge der vier Komparatoren an eine Zähler-Kontroll-Logik (CCL) angeschlossen sind, die jeweils aus den Vergleichs-Ergebnissen einen Ergebniswert aus mehreren festgelegten Ergebniswerten bildet, wobei diese Ergebniswerte in einem nachfolgenden Auf/Abwärts-Zähler (UDC) kombiniert und anschließend in einem Status-Detektor (SD) daraus resultierende Vorzeichen ausgewertet und zur Film-Mode-Erkennung mit dem festgelegten Muster verglichen werden, wobei insbesondere auch die jeweilige Phase des Halbbilds ermittelt wird und mit Hilfe dieser Informationen in einem Interpolator (INT) Vollbilder generiert werden.

### Zeichnungen

Anhand der Zeichnungen sind Ausführungsbeispiele der Erfindung beschrieben. Die Zeichnungen zeigen in:
- Fig. 1: vier Bildpunkte in der vertikal-temporalen Ebene;
- Fig. 2: ein Halbbild mit einem Segment;
- Fig. 3: ein Halbbild mit vier Segmenten;
- Fig. 4: eine Tafel mit Kombinations-Ergebnissen zur Ermittlung der Einschaltbedingung;
- Fig. 5: eine Tafel mit Kombinations-Ergebnissen zur Ermittlung der Ausschaltbedingung;
- Fig. 6: erfindungsgemäße Vorrichtung.

### Ausführungsbeispiele

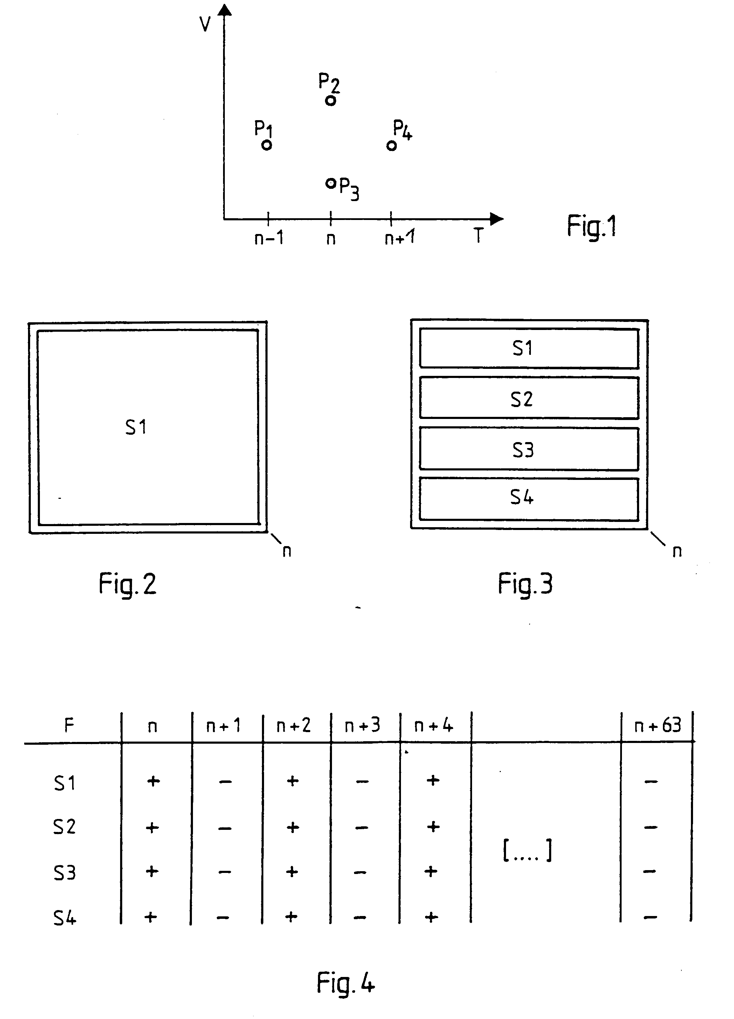

Gemäß Fig. 1 werden jeweils die Amplituden der Bildpunkte P1 aus Halbbild n-1 und P4 aus Halbbild n+1 mit den Amplituden der vertikal benachbarten Bildpunkte P2 und P3 aus Halbbild n verglichen. Daraus wird spalten- und zeilenweise für jeden Bildpunkt eins von drei möglichen Vergleichs-Ergebnissen ermittelt:
+1, wenn {P1<min(P2,P3) OR P1>max(P2,P3)} AND {min(P2,P3)≤P4≤max(P2,P3)}
-1, wenn {P4<min(P2,P3) OR P4>max(P2,P3)} AND {min(P2,P3)≤P1≤max(P2,P3)}
0 sonst.

Für jeden Bildpunkt innerhalb eines Segments werden die Vergleichsergebnisse, z.B. mit einem Vor/Rückwärtszähler, addiert. Nachfolgend wird nur das resultierende Vorzeichen der Summe aus den Vergleichsergebnissen dieses Segments verwertet und bildet das Kombinationsergebnis.
Für die Ermittlung der Film-Mode-Einschaltbedingung wird vorteilhaft jedes Halbbild n in vier Segmente S1-S4 nach Fig. 3 aufgeteilt. Für die Ermittlung der Film-Mode-Ausschaltbedingung reicht ein Segment S1 pro Halbbild n nach Fig. 2.

Für die Film-Mode-Einschaltbedingung nach Fig. 4 müssen die Kombinationsergebnisse für die vier Segmente S1-S4 eines Halbbilds F jeweils gleich sein. Zusätzlich müssen von Halbbild n bis Halbbild n+63 diese Kombinationsergebnisse halbbildweise zwischen '+' und '-' abwechseln. Dies kann durch einen weiteren Zähler überprüft werden, der innerhalb jeder Testperiode die Anzahl der richtigen Kombinationsergebnisse zählt. Diese Anzahl muß dann den Wert 4*64 = 256 erreichen. Wenn ein Fehler in diesem Schema auftaucht, wird ab Beginn des nächsten Halbbilds neu mit der Überprüfung begonnen.

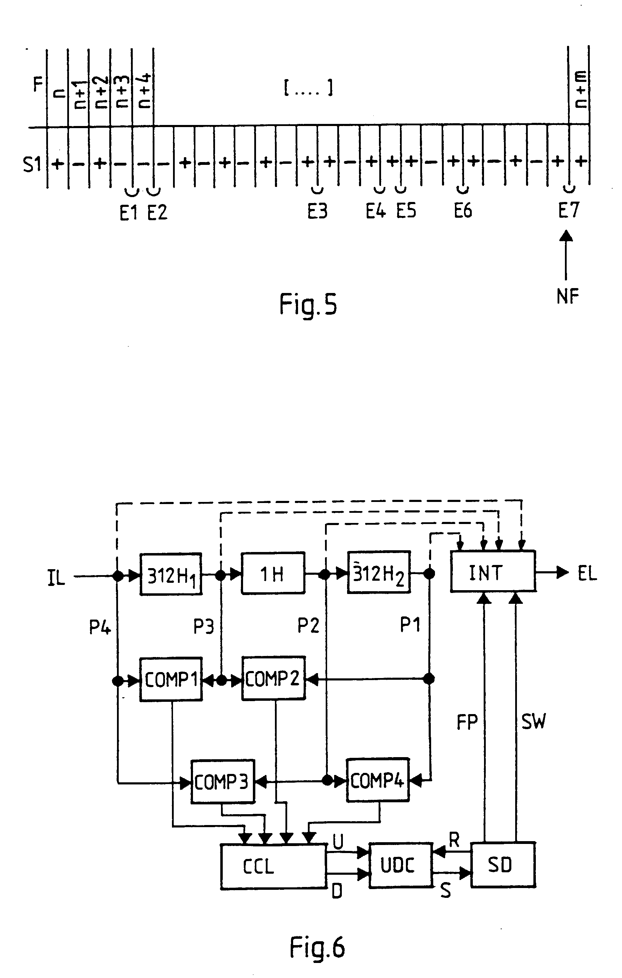

Für die Film-Mode-Ausschaltbedingung NF nach Fig. 5 müssen in mindestens 7 von 64 aufeinanderfolgenden Halbbildern F (mit jeweils einem Segment S1) die Kombinationsergebnisse vom richtigen Schema abweichen, d.h. aufeinanderfolgende Halbbild-Kombinationsergebnisse haben das gleiche Vorzeichen. In Fig. 5 sind 7 Fehler E1-E7 markiert. Bei Halbbild n+m, m=25 ist der siebte Fehler aufgetreten, wobei m kleiner als 64 ist. Ab Halbbild n+m beginnt dann eine neue Testperiode, anderenfalls ab Halbbild n+64.

Der erfindungsgemäßen Vorrichtung in Fig. 6 werden Bildpunkt-Abtastwerte von Eingangs-Zeilen IL zugeführt, die an einen ersten Halbbildspeicher 312H₁ (312 Zeilen), an einen ersten Komparator COMP1 und an einen dritten Komparator COMP3 weitergeleitet werden. Die Ausgangssignale des ersten Halbbildspeichers werden dem Eingang eines Zeilenspeichers 1H, dem ersten Komparator COMP1 und einem zweiten Komparator COMP2 zugeführt. Die Ausgangssignale des Zeilenspeichers werden dem Eingang eines zweiten Halbbildspeichers 312H₂, dem dritten Komparator COMP3 und einem vierten Komparator COMP4 zugeführt. Die Ausgangssignale des zweiten Halbbildspeichers werden dem zweiten Komparator COMP2 und dem vierten Komparator COMP4 zugeführt.
Am Eingang des ersten Halbbildspeichers steht jeweils der Bildpunkt P4 und am Eingang des Zeilenspeichers der Bildpunkt P3 und am Eingang des zweiten Halbbildspeichers der Bildpunkt P2 und am Ausgang des zweiten Halbbildspeichers der Bildpunkt P1 gemäß Fig. 1 zur Verfügung. Die Ausgänge der vier Komparatoren sind an eine Zähler-Kontroll-Logik CCL angeschlossen, die jeweils die unter Fig. 1 beschriebenen Vergleichs-Ergebnisse aufbereitet (+1, -1, 0), wobei diese Vergleichs-Ergebnisse in einem nachfolgenden Auf/Abwärts-Zähler UDC kombiniert werden ('+1' über Leitung U, '-1' über Leitung D).
In dem nachfolgenden Status-Detektor SD werden die resultierenden Vorzeichen über Leitung S ausgewertet und die Film-Mode-Einschaltbedingung bzw. Film-Mode-Ausschaltbedingung wie oben beschrieben detektiert und über Leitung SW ausgegeben. Zusätzlich kann entsprechend der ermittelten Vorzeichen die jeweilige Phase des Halbbilds (erstes oder zweites Halbbild) detektiert und über Leitung FP ausgegeben werden. Beim Auftreten eines entsprechenden Fehlers wird der Zähler UDC über Leitung R rückgesetzt.
Vorteilhaft werden die Informationen auf Leitung SW und FP in einem nachfolgenden Interpolator INT eingesetzt, der aus jeweils einem oder mehreren der Bildpunkte P1 bis P4 Original- und Schätzwerte für die Bildpunktwerte der Ausgangszeilen liefert. Im Fall von Film-Mode können in diesem Interpolator Vollbilder generiert werden, die aus jeweils zwei zusammengezogenen Halbbildern bestehen. Falls kein Film-Mode vorliegt, kann vorteilhaft eine Doppelmedian-Interpolation durchgeführt werden, wie sie in DE-A-4211955 beschrieben ist.

Zusätzlich können auch die Chrominanz-Amplituden gemäß der Erfindung überprüft und das Ergebnis mit dem für die Luminanz logisch verknüpft werden.

Die Erfindung kann auch zur senderseitigen Generierung der Film-Mode-Information verwendet werden, z.B. im Fall von altem Archivmaterial.

Die angegebenen Zahlenwerte haben sich für die PAL-Norm bewährt. Je nach Fernsehnorm oder Übertragungsbedingungen können diese Zahlenwerte leicht angepaßt werden.

## Patentansprüche

1. Verfahren zur Film-Mode-Detektion, bei welchem jeweils für vertikal benachbarte Bildpunktpaare P2 und P3 in einem Halbbild n verglichen wird, ob die beiden vertikal dazwischenliegenden Bildpunkte P1 bzw. P4 aus den beiden benachbarten Halbbildern n-1 bzw. n+1 in ihrer Amplitude zwischen den Amplituden des Bildpunktpaars P2 und P3 liegen, wobei diese Vergleichs-Ergebnisse innerhalb von Halbbildern zu einem Kombinationsergebnis kombiniert werden und Film-Mode gesetzt wird, wenn festgestellt wird, daß die aufeinanderfolgenden Kombinationsergebnisse von einer ersten Anzahl von aufeinanderfolgenden Halbbildern nicht von einem für den Film-Mode charakteristischen Muster, bei dem die Kombinationsergebnisse von Halbbild zu Halbbild alternieren, abweichen.

2. Verfahren nach Anspruch 1, **wobei**, die erste Anzahl von Halbbildern der Zahl 64 entspricht.

3. Verfahren nach Anspruch 1, **wobei**, der Film-Mode rückgesetzt wird, wenn jeweils innerhalb einer Folge mit einer zweiten Anzahl - insbesondere 64 - von aufeinanderfolgenden Halbbildern die Kombinations-Ergebnisse an einer vorgegebenen Anzahl von Stellen - insbesondere 7- von dem für den Film-Mode charakteristischen Muster abweichen.

4. Verfahren nach einem der Ansprüche 1 bis 3, **wobei**, die Vergleichsergebnisse zeilenweise für aktive Luminanz- und/oder Chrominanz-Bildpunkte aktiver Zeilen ermittelt werden.

5. Verfahren nach einem der Ansprüche 1 bis 4, **wobei**, für Segmente (S1) innerhalb von Halbbildern getrennte Kombinations-Ergebnisse ermittelt werden, wobei Halbbilder in eine festgelegte Anzahl - insbesondere 4 - von Segmenten (S1-S4) eingeteilt werden und die Kombinationsergebnisse für alle Segmente eines Halbbildes gleich sein müssen, damit der Film-Mode gesetzt werden kann.

6. Verfahren nach einem der Ansprüche 1 bis 5, **wobei**, die Vergleichs-Ergebnisse '+1', '-1' und '0' ermittelt werden:
+1, wenn {P1<min(P2,P3) OR P1>max(P2,P3)} AND {min (P2,P3)≤P4≤max(P2,P3)};
-1, wenn {P4<min(P2,P3) OR P4>max(P2,P3)} AND {min (P2,P3)≤P1≤max(P2, P3)};
0 sonst.

7. Verfahren nach einem der Ansprüche 1 bis 6, **wobei**, zur Ermittlung der Kombinationsergebnisse die Vergleichs-Ergebnisse bildpunktweise in jedem Halbbild bzw. Segment addiert werden - insbesondere mit einem Vor/Rückwärtszähler -, wobei das Kombinationsergebnis jeweils in dem Vorzeichen der resultierenden Summe besteht.

8. Verfahren nach einem der Ansprüche 1 bis 7, **wobei**, das für den Filmmode charakteristische Muster aus halbbildweise abwechselnden Vorzeichen besteht.

9. Verfahren nach einem der Ansprüche 1 bis 8, **wobei**, die Übereinstimmung mit dem für den Filmmode charakteristischen Muster mit einem weiteren Zähler überprüft wird, der innerhalb der ersten oder zweiten Anzahl von Halbbildern die Anzahl der übereinstimmenden Kombinationsergebnisse zählt, wobei ab Beginn des nächsten Halbbilds neu mit der Überprüfung begonnen wird, wenn eine entsprechende Abweichung vom Muster aufgetreten ist.

10. Verfahren nach einem oder mehreren der Ansprüche 1 bis 9, **wobei**, die erste Anzahl gleich der zweiten Anzahl ist.

11. Vorrichtung zur Film-Mode-Detektion zur Durchführung des Verfahrens nach Anspruch 1, **wobei** der Vorrichtung Bildpunkt-Abtastwerte von Eingangs-Zeilen (IL) zugeführt sind, die an einen ersten Halbbildspeicher (312H₁), an einen ersten Komparator (COMP1) und an einen dritten Komparator (COMP3) weitergeleitet werden, wobei die Ausgangssignale des ersten Halbbildspeichers dem Eingang eines Zeilenspeichers (1H), dem ersten Komparator (COMP1) und einem zweiten Komparator (COMP2) zugeführt sind und die Ausgangssignale des Zeilenspeichers dem Eingang eines zweiten Halbbildspeichers (312H₂), dem dritten Komparator (COMP3) und einem vierten Komparator (COMP4) zugeführt sind und die Ausgangssignale des zweiten Halbbildspeichers dem zweiten Komparator (COMP2) und dem vierten Komparator (COMP4) zugeführt sind, wobei die Ausgänge der vier Komparatoren an eine Zähler-Kontroll-Logik (CCL) angeschlossen sind, die jeweils aus den Vergleichs-Ergebnissen einen definierten Ergebniswert von mehreren möglichen nach vorbestimmten Regeln bildet, wobei ein nachfolgender Auf/Abwärts-Zähler (UDC) vorgesehen ist, der die Ergebniswerte kombiniert und wobei ein Status-Detektor (SD) vorgesehen ist, der das resultierende Vorzeichen auswertet und zur Film-Mode-Erkennung mit dem festgelegten Muster vergleicht.

12. Vorrichtung nach Anspruch 11, **wobei** Mittel vorgesehen sind, die insbesondere auch die jeweilige Phase des Halbbilds ermitteln und ein Interpolator (INT) vorgesehen ist, der mit Hilfe dieser Informationen Vollbilder generiert.

## Claims

1. Method of detecting film mode in which, for each vertically adjacent pair of picture elements P2 and P3 in a field n, a comparison is made as to whether the two picture elements P1 and P4 lying vertically therebetween in the two adjacent fields n-1 and n+1 have an amplitude which lies between the amplitudes of the pair of picture elements P2 and P3, wherein the results of these comparisons are combined within the fields into a combined result and the film mode is set if it is determined that the successive combined results from a first number of successive fields do not deviate from a pattern characteristic of the film mode in which the combined results alternate from field to field.

2. Method in accordance with Claim 1, wherein the first number of fields corresponds to the number 64.

3. Method in accordance with Claim 1, wherein the film mode is reset if, within a sequence comprising a second number - in particular 64 - of successive fields, the combined results deviate from the pattern characteristic of the film mode at a predetermined number - in particular 7 - of positions.

4. Method in accordance with any of the Claims 1 to 3, wherein the comparison results are determined on a line-by-line basis for active luminance and/or chrominance picture elements of active lines.

5. Method in accordance with any of the Claims 1 to 4, wherein separate combined results are determined for segments (S1) within the fields whereby the fields are divided into a predetermined number - in particular 4 - of segments (S1 - S4) and the combined results for each of the segments of a field have to be the same in order for the film mode to be set.

6. Method in accordance with any of the Claims 1 to 5, wherein the comparison results "+1", "-1" and "0" are determined:
+1, if {P1 < min(P2, P3) OR P1 > max(P2, P3) } AND {min(P2, P3}≤P4≤max(P2, P3) };
-1, if {P4 < min(P2, P3) OR P4 > max(P2, P3) } AND {min(P2, P3)≤P1≤max(P2, P3) };
0, otherwise.

7. Method in accordance with any of the Claims 1 to 6, wherein for the purposes of determining the combined result, the comparison results are added picture element by picture element in each field or segment, in particular using a reversible counter, whereby the combined result subsists in each case in the prefix sign of the resultant sum.

8. Method in accordance with any of the Claims 1 to 7, wherein the pattern characteristic of the film mode consists of prefix signs that alternate from field to field.

9. Method in accordance with any of the Claims 1 to 8, wherein the process of matching the pattern characteristic of the film mode is monitored by means of further counter which counts the number of matching combined results within the first or second number of fields whereby the monitoring process begins afresh from the beginning of the next field if a relevant deviation from the pattern has occurred.

10. Method in accordance with any of the Claims 1 to 9, wherein the first number is equal to the second number.

11. Film mode detecting device for carrying out the method in accordance with Claim 1 wherein picture element sampling values from the input lines (IL) are supplied to the device, these being passed on to a first field store (312H₁), to a first comparator (COMP1) and to a third comparator (COMP3), wherein the output signals of the first field store are supplied to the input of a line store (1H), to the first comparator (COMP1) and to a second comparator (COMP2) and the output signals of the line store are supplied to the input of a second field store (312H₂), to the third comparator (COMP3) and to a fourth comparator (COMP4) and the output signals of the second field store are supplied to the second comparator (COMP2) and to the fourth comparator (COMP4), wherein the outputs of the four comparators are connected to a counter control logic (CCL) which forms one of several possible defined resultant values - using predetermined rules - from the results of the comparisons, wherein there is provided a following up/down counter (UDC) which combines the resultant values and wherein there is provided a status detector (SD) which tests the resultant prefix sign and compares it with the predetermined pattern for the purposes of identifying the film mode.

12. Device in accordance with Claim 11, wherein means are provided which also determine in particular the instantaneous phase of the field and an interpolator (INT) is provided which generates frames with the help of this information.

## Revendications

1. Procédé de détection du mode film par lequel, pour chacune des paires de points d'image voisines verticalement P2 et P3 dans une trame n, on contrôle si les deux points d'image intercalés verticalement P1, P4 des deux trames voisines n-1 et n+1 possèdent une amplitude qui est comprise entre les amplitudes de la paire de points d'image P2 et P3. Les résultats de ces comparaisons seront combinés au sein des trames et le mode film sera enclenché à chaque fois que sur un premier nombre donné de trames, la série de résultats combinés ne s'écarte pas d'un modèle caractéristique de mode film, dans lequel les résultats combinés altement d'une trame sur l'autre.

2. Procédé selon la revendication 1, pour lequel le premier nombre de trames est égal à 64.

3. Procédé selon la revendication 1, par lequel le mode film est interrompu à chaque fois que, sur une série d'un deuxième nombre donné de trames (ici, 64), des résultats combinés s'écartent du modèle caractéristique de mode film dans un nombre donné de points (ici, 7).

4. Procédé selon l'une des revendications 1 à 3, par lequel les résultats de comparaison sont déterminés ligne par ligne pour les points d'image de luminance et/ou chrominance actifs des lignes actives.

5. Procédé selon l'une des revendications 1 à 4, par lequel des résultats combinés sont déterminés pour les segments (SI) au sein des trames qui sont elles-mêmes divisées en un nombre donné (ici, 4) de segments (SI à S4) et les résultats combinés de tous les segments d'une trame doivent être identiques pour que le mode film soit enclenché.

6. Procédé selon l'une des revendications 1 à 5, dans lequel les résultats de comparaison « +1 », « -1 » et « 0 » sont déterminés ainsi :
+1, si {P1<min(P2, P3) OU P1>max(P2, P3) } ET {min(P2, P3)≤P4≤max(P2, P3) }
-1, si {P4<min(P2, P3) OU P4>max(P2, P3) } ET {min(P2, P3)≤P1≤max(P2, P3) }
0 dans les autres cas.

7. Procédé selon l'une des revendications 1 à 6, dans lequel, pour déterminer les résultats combinés, les résultats de comparaison sont ajoutés point par point dans chaque trame ou segment, à l'aide, par exemple, d'un compteur croissant/décroissant. Le signe obtenu pour la somme des résultats de comparaison constitue à chaque fois le résultat combiné.

8. Procédé selon l'une des revendications 1 à 7, pour lequel le modèle caractéristique du mode film est constitué de signes alternant d'une trame sur l'autre.

9. Procédé selon l'une des revendications 1 à 8, par lequel la correspondance avec le modèle caractéristique de mode film est contrôlée par un compteur supplémentaire qui compte le nombre de résultats combinés corrects pendant le premier ou le second nombre de trames. En cas de détection d'une erreur, le contrôle recommence à partir du début de la trame suivante.

10. Procédé selon l'une au moins des revendications 1 à 9, pour lequel le premier nombre de trames est égal au second nombre.

11. Dispositif de détection de mode ciné permettant d'appliquer le procédé de la revendication 1, dans lequel les échantillons de points d'image de lignes d'entrée (IL) sont acheminés vers le dispositif et sont ensuite dirigés vers une première mémoire de trame (312H₁), vers un premier comparateur (COMP1) et vers un troisième comparateur (COMP3). Les signaux de sortie de la première mémoire de trame sont dirigés vers une mémoire de lignes (1H), vers le premier comparateur (COMP1) et vers un deuxième comparateur (COMP2) et les signaux de sortie de la mémoire de lignes sont dirigés vers l'entrée d'une deuxième mémoire de trame (312H₂), vers le troisième comparateur (COMP3) et vers un quatrième comparateur (COMP4). Les sorties des quatre comparateurs sont reliées à une logique de contrôle par comptage (CCL) qui établit, à partir des résultats de comparaison, un résultat défini de plusieurs valeurs possibles selon des règles prédéterminées. Ces valeurs sont combinées dans un compteur croissant ou décroissant (UDC) situé en aval, leur signe est ensuite exploité à l'aide d'un détecteur d'état (SD) et les valeurs sont ensuite comparées au modèle défini en vue de la détection du mode film.

12. Dispositif selon la revendication 11, pour lequel sont prévus des moyens permettant en particulier de déterminer la phase de la trame et pour lequel est également prévu un interpolateur (INT) qui génère les images complètes à l'aide de ces informations.
